# NEUE EUROPÄISCHE PATENTSCHRIFT

(11) **EP 0 988 504 B2**
(45) Veröffentlichungstag und Bekanntmachung des Hinweises auf die Entscheidung über den Einspruch: **23.06.2004**
(45) Hinweis auf die Patenterteilung: 20.09.2000
(21) Anmeldenummer: 98966580.7
(22) Anmeldetag: 23.12.1998
(51) Int. Cl.: G01B 1/00

(54) **PROGRAMMIERBARE STEUERUNG MIT EINER BEDIENEINHEIT, WOBEI EINE TASTE DER BEDIENEINHEIT MITTELS EINER PROGRAMMIERBAREN FUNKTION ZU EINER AKTIVEN TASTE SCHALTBAR IST**
OPERATOR BUTTONS AS ACTIVE BUTTONS
TOUCHES DE COMMANDE SERVANT DE TOUCHES ACTIVES

(30) Priorität: 20.03.1998 DE 19812423
(43) Veröffentlichungstag der Anmeldung: 29.03.2000
(73) Patentinhaber: Moeller GmbH, 53115 Bonn (DE)
(72) Erfinder: Bauerfeind, Dieter, 53177 Bonn (DE)
(74) Vertreter: Schohe, Stefan
(86) Internationale Anmeldenummer: PCT/DE1998/003780
(87) Internationale Veröffentlichungsnummer: WO 1999/049371

(56) Entgegenhaltungen:
- DE-A- 4 125 176
- Handbuch "LOGO", Siemens AG, 1996

## Beschreibung

Die Erfindung betrifft eine programmierbare Steuerung mit einer Recheneinheit, einem Bildschirm, einer Bedieneinheit und mit Signaleingängen und Signalausgängen, wobei die Recheneinheit, der Bildschirm, die Bedieneinheit, die Signaleingänge und die Signalausgänge in einem gemeinsamen Gehäuse untergebracht sind und wobei Schaltfunktionen durch den Benutzer über eine menuegeführte Benutzeroberfläche auf dem Bildschirm anhand vorgegebener Funktionen programmierbar sind.

Eine Steuerung dieser Art ist bereits aus der WO 97/09661 bekannt. Derartige Steuerungen werden als intelligente Schaltelemente vielfach in der Industrie, der Wissenschaft und im Haushalt eingesetzt. Mit ihnen lassen sich Schaltabläufe zwischen den an den Signaleingängen anliegenden Eingangsspannungen und den Signalausgängen in vielfältiger Weise programmieren. Dem Anwender werden für seine Programme intern vorhandene Module, z.B. Counter- oder Timermodule, und fertige Funktionen von einem implementierten Betriebssystem zur Verfügung gestellt. Die Programme werden dabei entweder über die menuegeführte Oberfläche mit den an der Steuerung vorhandenen Bedientasten oder mittels eines externen und über eine Datenleitung angeschlossenen Rechners (PC) eingegeben.

Das LOGO! Handbuch, Ausgabe 3, heraus gegeben von der Siemens AG, beschreibt eine programmierbare Steuerung der in Abstaz 1 genannten Art. Diese Steuerung kann, während die Steuerung das Programm abarbeitet, in eine Betriebsart "Parametrieren" versetzt werden. In dieser Betriebsart kann ei der Wert eines Parameters des Programms durch die Bedientasten geändert werden. Durch Drücken einer Taste OK wird die Eingabe des neuen Worts des Parameters bestätigt und für das laufende Programm übernommen.

Nachteilig für die Erstellung der Schaltprogramme nach dem Stand der Technik ist, daß deren Ablauf nicht oder nur unter großem Aufwand getestet werden kann. So müssen zum Ausprobieren die erforderlichen Spannungen an die Signaleingänge angelegt werden, um den Schaltablauf und die damit verbundene Signalausgabe zu bewirken. Ebenso gestaltet sich die Fehlersuche im laufenden Programm sehr schwierig. Diese Probleme tragen zu einer erheblichen Betriebsunsicherheit bei. Auch ist es bei den bekannten Steuerungen nachteilig, daß das einmal ablaufende Schaltprogramm nicht beeinflußbar, bzw. nicht durch einfache Maßnahmen zu unterbrechen ist.

Aufgabe der Erfindung ist es daher, eine programmierbare Steuerung hoher Betreibssicherheit zu schaffen, die komfortabel zu handhaben ist und deren Schaltprogramme auf einfache Weise ohne weitere Hilfsmittel auf ihren korrekten Ablauf untersuchbar sind.

Diese Aufgabe wird durch eine programmierbare Steuerung nach Anspruch 1 gelöst.

Die erfindungsgemäße aktive Taste kann auf vielfältige Weise eingesetzt werden. So ist es bei einer ersten besonders vorteilhaften Ausführungsform möglich, mittels der aktiven Taste einen Signaleingang zu simulieren. Für die Aktivierung ist in dem Betriebssystem eine Funktion vorgesehen, mit der sich jede der Bedientasten als aktive Taste deklarieren läßt. Das Betätigen der so definierten aktiven Taste kann dann als logischer Zustand statt des elektrischen Eingangssignales innerhalb eines Schaltprogrammes behandelt werden. Jeder Schaltablauf kann somit an das Betätigen der aktiven Taste gekoppelt werden. Die aktive Taste wirkt wie ein zusätzlicher Eingang ohne Klemme.

Da sich jeder Spannungszustand an einem der Signaleingänge mit dem Betätigen einer aktiven Taste gleichsetzen, d.h. simulieren, läßt, werden weitere Hilfsmittel wie unabhängige Spannungsversorgungen oder Signalgeber für die Erprobung eines Schaltprogrammes oderfür die Fehlersuche überflüssig. Die Steuerung läßt sich jederzeit ohne das Vorhandensein von Eingangsspannungen programmieren und testen. Es kann somit vor dem Einsatz am späteren Einsatzort eingerichtet werden. Die Einrichtung von Schaltprogrammen der programmierbaren Steuerung wird dadurch besonders einfach und komfortabel.

Die bequeme Möglichkeit, die Eingangssignale zu ersetzen, macht die programmierbaren Steuerung zuverlässig und damit wegen der geringen Aufwendungen für Reparaturen und Wartungen kostengünstig für den Anwender.

Die aktiven Tasten können in den Systemparametern der Steuerung aktiviert und deaktiviert werden. Der Grundzustand ist "deaktiviert". Sind die Tasten aktiv, können sie während des Programmablaufes und im Status-Menue benutzt werden.

In einer anderen vorteilhaften Ausführungsform wird die aktive Taste so eingesetzt, daß mit ihrer Betätigung ein laufendes Programm bee influßt wird. Die aktive Taste kann in dieser Funktion beispielsweise als Unterbrechung in der Art eines Notaus in einem Programm eingesetzt werden. Dazu wird die aktive Taste auf einen Interrupt des in der Steuerung vorhandenen Microcontrolers gelegt oder ihr Zustand wird innerhalb des Schaltprogrammes zyklisch abgefragt. Wie auch bei dem erstgenannten Ausführungsbeispiel hängt damit der Ablauf einer Schaltfunktion von der Betätigung der aktiven Taste ab.

Als weitere Einsatzmöglichkeit der aktiven Taste bietet es sich an, innerhalb eines Schaltprogrammes eine Handsteuerung unter Umgehung des Programmablaufes vorzusehen. So ist es beispielsweise möglich, die Steuerung als automatische Zeitsteuerung für Rollläden einzusetzen und dennoch mittels der aktiven Tasten eine übergeordnete Handsteuerung zu ermöglichen.

Die Funktion für das aktivieren und deaktivieren einer Taste ist so konzipiert, daß die aktive Taste an jeder Stelle der programmierbaren Schaltfunktion einsetzbar ist. Damit wird eine flexible Einsatzmöglichkeit und damit ein besonders hoher Bedien komfort gewährleistet. Um die Simulation mehrere: Signaleingänge zu bewerkstelligen ist es von Vorteil, ei ne entsprechende Anzahl aktiver Tasten innerhalb einer programmierbaren Schaltfunktion einzuseten. Die Zahl der gleichzeitig benutzten aktiven Tasten ist dabei nur auf die Zahl der Bedientasten der Steuerung, die jede als aktive Taste schaltbar ist, beschränkt.

Es ist zudem von Vorteil, die Aufforderung zum Betätigen einer aktiven Taste auf dem Bildschirm anzuzeigen Dadurch wird der Anwender über die nötigen Handlungsschritte informiert. Um den Anwender auf die Notwendigkeit der Eingabe hinzuweisen ist es von Vorteil, die Aufforderung zum Betätigen der aktiven Taste mit einem akustischen Signal zu koppeln.

Ein Ausführungsbeispiel der erfindungsgemäßen Steuerung mit aktiven Tasten ist in den Zeichnungen 1 und 2 dargestellt und wird im folgenden näher beschneben. Es zeigen
- **Figur 1**: eine speicherprogrammierbare Steuerung und
- **Figur 2**: ein Beispiel für den Einsatz einer aktiven Taste.

In der Figur ist eine speicherprogrammierbare Steuerung mit einem Gehäuse 1 und mit einer Reihe von Spannungs Eingängen 2 (I) und Spannungs Ausgängen 3 (O). Die programmierte Steuerung schaltet unter Kontrolle eines Programmes den Stromfluß zwischen den Eingängen 2 und den Ausgängen 3. Das Programm kann der im Gehäuse 1 untergebrachten Recheneinheit mittels der Bedientasten 4 und der Mehrfunktionstaste 5 eingegeben werden. Jede der Bedientasten 4 und der Mehrfunktionstaste 5 kann als aktive Taste definiert werden. Die Eingabe und der Programmablauf sind auf dem Bildschirm 6 beobachtbar. Auf dem Bildschirm 6 wird die Erfordernis zum Betätigen einer aktiven Taste in einem Feld 11 angezeigt. Auf dem Bildschirm 6 ist ansonsten während der Programmierung eine menuegeführte Benutzeroberfläche dargestellt. Mittels einer Schnittstelle 7 kann die Steuerung von einem externen Rechner (PC) programmiert werden

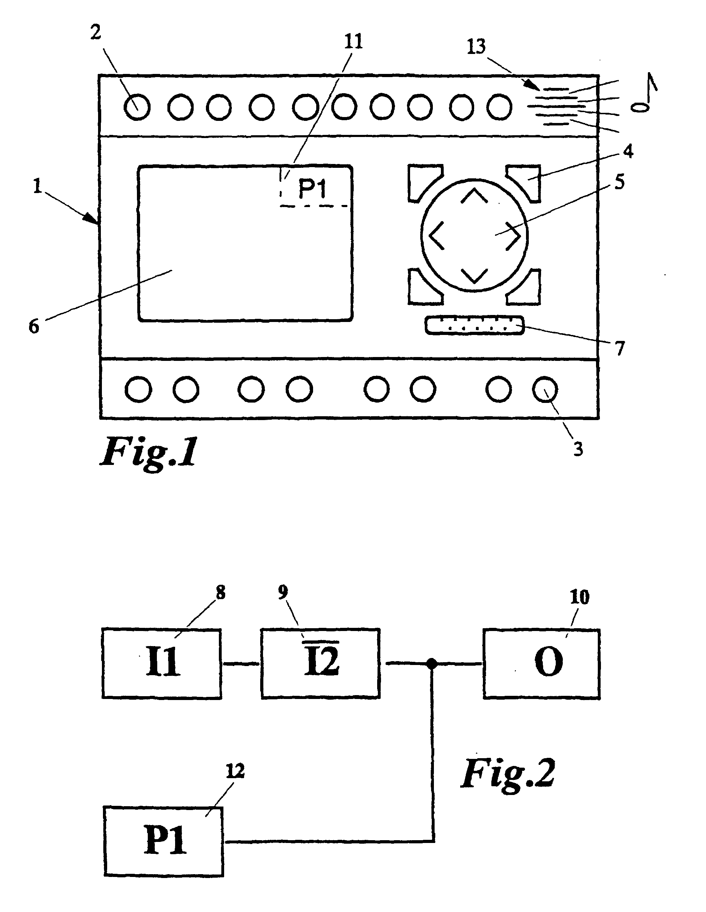

In Figur 2 ist ein Beispiel für den Einsatz einer aktiven Taste dargestellt. Die Signaleingänge 8 und 9 sind so verschaltet, daß an Eingang 8 ein Signal (I) anliegen muß und an Eingang 9 keines anliegen darf (I), um ein Ausgangssignal auf den Signalausgang 10 zu bekommen. Bedingung für das Anlegen des Signales auf den Ausgang 10 ist das Betätigen der Bedientaste 12 (P1), wie auch auf dem Bildschirm 6 in Feld 11 angezeigt ist (Figur 1). Das Erscheinen der Aufforderung zur Eingabe ist mit einem Signalton 13 unterlegt.

## Patentansprüche

1. Programmierbare Steuerung mit einer Recheneinheit, einem Bildschirm (6), einer Bedieneinheit (4,5) und mit Signaleingängen (2) und Signalausgängen (3), wobei die Recheneinheit, der Bildschirm (6), die Bedieneinheit (4,5), die Signaleingänge (2) und die Signalausgänge (3) in einem gemeinsamen Gehäuse (1) untergebracht sind und wobei Schaltfunktionen durch den Benutzer über eine menuegeführte Benutzeroberfläche auf dem Bildschirm (6) anhand vorgegebener Funktionen programmierbar sind, wobei eine Taste der Bedieneinheit (4,5) mittels einer programmierbaren Funktion zu einer aktiven Taste schaltbar ist, von deren Betätigung der Ablauf einer Schaltfunktion abhängt, und wobei die aktive Taste an jeder Stelle der programmierbaren Schaltfunktion einsetzbar ist.

2. Steuerung nach Anspruch 1, wobei mit der aktiven Taste ein Signaleingang (2) simulierbar ist.

3. Steuerung nach Anspruch 2, wobei der Ablauf einer Schaltfunktion solange unterbrochen ist, bis die aktive Taste von einem Benutzer betätigt ist.

4. Steuerung nach einem der vorherigen Ansprüche, wobei durch Betätigung der aktiven Taste die Schaltfunktion unterbrechbar ist.

5. Steuerung nach einem der vorherigen Ansprüche, wobei mehrere aktive Tasten innerhalb einer programmierbaren Schaltfunktion einsetzbar sind.

6. Steuerung nach einem der vorherigen Ansprüche, wobei jede der zur Bedieneinheit gehörenden Tasten als aktive Taste schaltbar ist.

7. Steuerung nach einem der vorherigen Ansprüche, wobei die Aufforderung zum Betätigen der aktiven Taste auf dem Bildschirm anzeigbar ist.

8. Steuerung nach einem der vorherigen Ansprüche, wobei die Aufforderung zum Betätigen der aktiven Taste mit einem akustischen Signal (13) einhergeht.

## Claims

1. Programmable control with a computing unit, a monitor (6), an operating unit (4,5) and with signal inputs (2) and signal outputs (3), while the computing unit, the monitor (6), the operating unit (4,5), the signal inputs (2) and the signal outputs (3) are located in a common casing (1), and while switching functions are programmable by the user using a menu-assisted user interface on the monitor (6) using predefined functions,
wherein, using a programmable function, a button of the operating unit (4,5) is switchable to an active button on the actuation of which depends the sequence of a switching function,
and wherein the active button may be used at every point of the programmable switching function.

2. Control as claimed in claim 1, wherein a signal input (2) may be simulated using the active button.

3. Control as claimed in claim 2, wherein the sequence of a switching function is interrupted for as long as the active button is not actuated by a user.

4. Control as claimed in any preceding claim, wherein the switching function is interruptible by the actuation of the active button.

5. Control as claimed in any preceding claim, wherein several active buttons may be used within a programmable switching function.

6. Control as claimed in any preceding claim, wherein every button belonging to the operating unit is switchable as an active button.

7. Control as claimed in any preceding claim, wherein the prompt for actuating (11) the active button may be displayed on the monitor.

8. Control as claimed in any preceding claim, wherein the prompt for actuating the active button is accompanied by an audible signal (13).

## Revendications

1. Commande programmable avec une unité de calcul, un écran (6), une unité de commande (4,5) et avec des entrées signaux (2) et des sorties signaux (3), l'unité de calcul, l'écran (6), l'unité de commande (4,5), les entrées signaux (2) et les sorties signaux (3) étant placés dans un boîtier commun (1) et les fonctions de commande étant programmables par l'utilisateur à partir de fonctions prédéfinies au moyen d'une surface d'utilisateur guidée par menu sur l'écran (6),
**où** une touche de l'unité de commande (4,5) peut être commutée comme touche active au moyen d'une fonction programmable, le déroulement d'une fonction de commande dépendant de la manipulation de ladite touche
**et où** la touche active peut être appliquée à chaque position de la fonction de commande programmable.

2. Commande selon revendication 1, **où** une entrée signaux (2) peut être simulée avec la touche active.

3. Commande selon revendication 2, **où** le déroulement d'une fonction de commande est interrompu tant que la touche active n'est pas manipulée par un utilisateur.

4. Commande selon l'une des revendications précédentes, **où** la fonction de commande peut être interrompue par manipulation de la touche active.

5. Commande selon l'une des revendications précédentes, **où** plusieurs touches actives peuvent être appliquées à l'intérieur d'une fonction de commande programmable.

6. Commande selon l'une des revendications précédentes, **où** chacune des touches appartenant à l'unité de commande peut être commutée comme touche active.

7. Commande selon l'une des revendications précédentes, **où** l'appel à manipuler (11) la touche active est affichable sur l'écran.

8. Commande selon l'une des revendications précédentes, **où** l'appel à manipuler la touche active est émis avec un signal acoustique (13).
